# EUROPEAN PATENT APPLICATION

(11) **EP 3 739 773 A1**
(43) Date of publication of application: **18.11.2020**
(21) Application number: 19175153.6
(22) Date of filing: 17.05.2019
(51) Int. Cl.: H04B 10/077, G06N 3/04, G06N 3/08

(54) **PERFORMANCE METRIC EVALUATION OF COMPONENTS IN AN OPTICAL NETWORK**

(71) Applicant: Xieon Networks S.à r.l., 2536 Luxembourg (LU)
(72) Inventor: Pereira, Bruno, 3060-353 Febres (PT); Morais, Rui, 2720-804 Amadora (PT); Pedro, Joao, 1070-133 Lisboa (PT)
(74) Representative: Lucke, Andreas

(57) **Abstract**

A computer-implemented method of evaluating a performance metric of a connection or a part of a connection between nodes in a network, the connection being described by a set of connection parameters, the method comprising estimating a baseline performance metric of the connection with a baseline model based on the connection parameters, providing the connection parameters to a machine learning model for obtaining a performance metric correction, wherein the machine learning model is trained for evaluating a deviation between the output of the baseline model and a performance reference for the same set of training connection parameters, and combining the baseline performance metric and the performance metric correction based on a calibration function for obtaining the performance metric.

## Description

### FIELD OF THE INVENTION

The present invention is in the field of network planning and management. More precisely, the present invention relates to optical performance evaluation for planning and restoration of connections in optical networks.

### BACKGROUND

The Capital Expenditures (CapEx) in an optical network are to a large extent dependent on the type and amount of line interfaces that need to be deployed to fulfill all traffic requirements. Consequently, attaining a CapEx-optimized design/operation demands optimizing tasks such as routing, grooming, 3R (Reamplification, Reshaping, and Retiming) placement and spectrum assignment, as well as being able to operate line interfaces (at the end nodes of lightpaths) with the maximum possible capacity for a given reach. The latter requirement can only be accomplished if an accurate estimation of optical performance is available.

The optical performance estimation of a lightpath involves the assessment of the quality of the data channel, and depends on several aspects such as type of fibers, number of spans, span length, number and type of network elements (e.g. ROADMs, in-line amplifiers) traversed, bit rate, modulation format, channel shape, channel wavelength, FEC overhead, among others. Accurately estimating optical performance is key to operate the network cost-effectively, since it enables to, for instance, reduce the number or even eliminate the need to deploy expensive 3R regeneration devices at intermediate nodes and to maximize the capacity available in each lightpath by employing, for example, higher order modulation formats.

In addition to the accuracy requirement, some key applications demand fast routing or rerouting of lightpaths (e.g. fast service provisioning, optical restoration) and impose strict response times to the routing engine installed in or accessible to a SDN controller or NMS. This severely limits the computational effort that can be afforded for optical performance estimation.

Therefore, attaining both accurate and fast optical performance estimation is a key technical challenge to allow multiple path discovery and verification, such as for service provisioning and/or restoration.

Currently, the optical performance models employed in the routing engines utilized for online service provisioning are mostly based on heuristic models, such as the closed-form Gaussian Noise (GN) model for example described by P. Poggiolini ("The GN Model of Non-Linear Propagation in Uncompensated Coherent Optical Systems," IEEE/OSA Journal of Lightwave Technology, vol. 30, no. 24, pp. 3857-3879, Dec. 2012*),* which can meet stringent computation times at the expense of accuracy by simplifying or even neglecting non-linear effects in the elements of the network. The main disadvantage of these models is that they are defined within an operation range and under well-defined conditions, which in turn brings a lot of uncertainties and an overall conservative estimation of the performance. This can ultimately result in blocking valid services from being deployed and/or the usage of unnecessary additional equipment in the network.

An additional constraint for planning and operation comes from the trend towards open and disaggregated optical network deployments. As said heuristic models are often proprietary (i.e. derived by the system vendor), they cannot be immediately applied to estimate the optical performance of lightpaths traversing equipment from different vendors. This is being addressed by industry consortiums promoting common and agreed models to estimate performance in such scenarios. Nevertheless, these models are usually simpler and more conservative (i.e. with lower accuracy) than the proprietary ones from system vendors.

More accurate but time consuming analytical models, such as the Enhanced Gaussian Noise (EGN) Model described by Carena et al. ("EGN Model of Non-Linear Fiber Propagation," Optics Express, vol. 22, no. 13, pp. 16335-16362, June 2014*),* or even numerical simulation can be exploited to estimate optical performance in offline planning but do not meet the strict upper bounds for computation time of online applications such as fast provisioning of lightpaths or optical restoration. Moreover, in (offline) network planning the complexity of the underlying optical performance models is also limited in order to allow the network planner to exploit multiple possible scenarios in a reasonable timeframe. Therefore, this also favors the use of heuristic models, even if somewhat more complex models could be utilized.

Recently, D. Zibar et al. ("Machine Learning Techniques in Optical Communication," IEEE/OSA Journal of Lightwave Technology, vol. 34, no. 6, pp. 1442-1452, Mar., 2016*)* used machine learning methods to predict the performance of optical networks components in the presence of phase noise as a non-linear impairment. However, the complexity of the multivariate problem of lightpath performance estimation limits the application of machine learning models with high accuracy to scenarios whose underlying properties are equal or very similar to those utilized in the input training dataset. In other words, if the conditions are different from those used when creating the machine learning model, accuracy can be seriously compromised and these methods cannot be reliably used to estimate optical performance. Moreover, machine learning models are inherently black boxes which makes it difficult to explain dependencies of output performance metrics with performance-related input parameters.

### SUMMARY OF THE INVENTION

The known methods and corresponding devices therefore fall into different categories for distinct applications and thus either suffer from a lack of accuracy and a conservative estimation of the performance, from long computation times, or a limited field of reliable performance.

In view of this state-of-the-art, the object of the invention is to provide a way to reliably attribute performance metrics to connections or parts thereof with both high accuracy and at the same time low computation times for fast and efficient network planning and/or management.

This object is solved by a method of obtaining a performance metric or a correction thereof and corresponding systems according to the independent claims. The dependent claims relate to preferred embodiments.

According to a first aspect, the invention relates to a computer-implemented method of evaluating a performance metric of a connection or a part of a connection between nodes in a network, the connection being described by a set of connection parameters. The method comprises estimating a baseline performance metric of the connection with a baseline model based on the connection parameters, and providing the connection parameters to a machine learning model for obtaining a performance metric correction, wherein the machine learning model is trained for evaluating a deviation between the output of the baseline model and a performance reference for the same set of training connection parameters. The method then comprises combining the baseline performance metric and the performance metric correction based on a calibration function for obtaining the performance metric.

Thus, in contrast to prior art approaches of full estimation of the performance of network components by a machine learning model, the present invention relies on a determination of a performance metric correction to a potentially conservative output of a baseline model, such as a baseline model compatible with industry standards, wherein the correction is obtained by a machine learning model trained to estimate a deviation of an accurate performance reference from the baseline model. The performance reference can be reference values for a set of connection parameters with a higher accuracy than the baseline model but which may not be obtainable within a sufficiently short timeframe for the online provisioning or restoration of connections during operation of the network, such as complex numerical simulations or monitoring data from comparable physical systems.

The inventors found that a machine learning model can be effectively trained with a limited data set to capture said deviation of the baseline model from the performance reference also for nonlinear impairments in a connection, allowing for improving the conservative estimate of the baseline model with reliable accuracy while meeting the strict upper bounds for computation time in commonly used systems.

The machine learning model as contemplated herein represents a machine-based algorithm for obtaining an output for a series or set of input parameters, wherein the algorithm can be obtained by a training process involving a training data set consisting of samples of training input data and corresponding target output values. Said training process may implement a reinforcement based learning process, wherein an output for an initial machine-based algorithm with a set of algorithm parameters is compared to the target output value, and the set of algorithm parameters is adjusted over a series of iterations such that the output of the machine-based algorithm for the input training parameters approaches the corresponding target output value over the training data set. The machine learning model may then be the resulting machine-based algorithm with the algorithm parameters determined during the training process. In some of the following embodiments, reference will be made to artificial neural networks as exemplary machine learning models for the sake of illustration. However, the skilled person will appreciate that any regression-based supervised learning algorithm may be applied to at least similar effect based on the respective configuration as the machine learning model, and no limitation is intended with respect to the algorithms for implementing said regression-based learning system. For example, machine learning algorithms based on linear regression, polynomial regression, support vector regression, and/or Lasso regression, artificial neural networks, convolutional neural networks, combinations thereof, or the like may be used to implement the machine learning model.

Further, despite the interest in the properties of the end-to-end connection, the estimation of the performance metric can often be simplified into a series of partial problems of assessing a contribution of an impairment in a portion of the connection along its length. For example, as part of estimating the performance of the connection, only a performance metric for a part of said connection may be assessed with the method according to the first aspect, such as for a component of said connection, e.g. a network link, an amplifier, and/or a network switch to influence the path of said signal. Thus, while the following reference will be made to "a connection", the skilled person will appreciate that the methods and systems according to the embodiments are often only advantageously applied to parts of the connection, e.g. components of the connections, e.g. to improve an overall performance metric estimation.

The calibration function for combining the output of said machine learning model and the baseline model may be a weighted or a non-linear combination of the outcome of the models and usually depends on the performance metric as well as the mathematical definition of the deviation. For example, for a normalized performance metric, such as an optical signal to noise ratio, a deviation between the performance reference and the baseline performance metric may be a simple subtraction of both values, and the calibration function may correspondingly consist of a summation of the output of the machine learning model and the baseline model. However, any deviation, such as a ratio of the baseline performance metric and the performance reference, may be used, and a corresponding calibration function may additionally include predetermined or dynamic corrections to calibrate the performance metric correction determined by the machine learning model. For example, a user may limit, reduce, or switch off a contribution of the machine learning model onto the estimation with a predetermined or dynamic correction as part of the calibration function in case, for example, the conditions of the connection have not been accounted for when training the model or in case the user wants to explicitly rely only on the baseline model (e.g. open or disaggregated deployment where a baseline model has been agreed upon in the scope of an industry consortium).

Since running each model and then computing the result from the outcome of both models is expected to be very fast (the baseline model is selected to meet this expectation and the machine learning model will be inherently fast), this routing engine can be both fast and accurate. The machine learning model can also be adjusted online in case the monitoring system occasionally or regularly measures and then reports updates in performance metrics and/or parameters, which can be used to retrain the machine learning model, giving the routing engine the ability of dynamically keeping track of events affecting performance (e.g. ageing effects or unexpected degradation of devices).

Thus, the method according to the first aspect provides a versatile while at the same time reliable estimation of the performance metric wherein the common shortcomings of machine learning models may be addressed both at the training stage as well as during operation based on the determination of a deviation of the performance reference to a reliable but conservative baseline model.

In preferred embodiments, the network is an optical transport network, in particular a DWDM network, and the connection is a lightpath connecting nodes of the optical transport network or a portion of the lightpath traversed by an optical beam.

In an optical transport network, signals are transferred between nodes by electromagnetic waves traveling within a medium, wherein information can be imprinted onto the electromagnetic waves by, for example, modulation of the phase or amplitude of the electromagnetic carrier. In principle, any wavelength/frequency of electromagnetic waves can be used as an information carrier. However, most applications currently focus on telecom (C-band) wavelengths on the order of 1550 nm in the near-infrared part of the electromagnetic spectrum, said wavelength being primarily selected based on the transmission properties of optical fibers constraining the propagation of the electromagnetic waves. One of several parallel lightpaths may then be accommodated in a portion of the transmission spectrum of an optical fiber, and an optical beam may be generated by a light source, such as a laser, which is coupled into the optical fiber to transfer information from one end to another.

Despite the elaborate equipment and the high quality of the optical fibers, the transmission of a beam of electromagnetic radiation traversing such a fiber connection and associated amplifiers, gratings, switches, or the like, is usually subject to a plurality of impairments which affect the phase and amplitude of a signal traversing the connection. Said impairments may in particular correspond to nonlinear impairments which may depend on a set of connection parameters describing the connection, such as the medium traversed by the electromagnetic radiation, and the optical power, and/or the optical frequency of the optical beam.

In preferred embodiments, the connection parameters comprise one or more of a channel frequency, an optical power, a type of a network element in the connection, a modulation format, a bit rate, and/or a channel shape.

Thus, the baseline model and the machine learning model may take into account the plurality of connection parameters affecting a transmission in an optical network to estimate their contribution to the performance metric.

In preferred embodiments, the performance metric assesses an impact of a nonlinear contribution of the connection on a signal quality in the network, in particular an optical power dependent modification of a signal traversing an element of the network, preferably an optical power dependent modification of the optical properties of an optical fiber.

Said nonlinear contribution may result in a difficulty of accurately predicting a performance metric for the connection, such that complex numerical calculations may be required to reliably obtain said performance metric, and a corresponding calculation time for said estimation may be high as compared to commonly available timeframes for validating a light path. Thus, the method according to the first aspect can be particularly suitable for said nonlinear contributions of the connection on the signal quality in the optical network by providing an advantageous compromise of accuracy and computational speed.

In preferred embodiments, the performance metric includes one or more of an optical signal to noise ratio, a power level, a bit error rate, a Q factor, and/or a noise figure.

In some embodiments, the performance metric includes a specific contribution to a general performance metric, such as a nonlinear contribution to a performance metric, e.g. a nonlinear optical signal to noise ratio.

In preferred embodiments, the baseline model has an execution time compatible with online service provisioning and/or optical path restoration in an optical transport network, in particular an execution time of less than 50 ms and preferably less than 20 ms.

Preferably, the baseline model simplifies the assumptions or calculation steps of a model required to obtain the performance reference in order to shorten an execution time of the baseline model to become compatible with online service provisioning and/or optical path restoration. Thus, despite the more complex underlying dependencies of the performance metric on the connection parameters, the baseline model is chosen to provide a reliable estimation of the performance metric in said shortened timeframe, wherein said simplifications in said baseline model serve to decrease computational complexity. For example, said baseline model may be an incoherent Gaussian noise (iGN) model for conservatively assessing a nonlinear impairment in an optical fiber.

However, based on the inherent comparatively short execution time of machine learning models and the finding of the inventors, that a trained machine learning model may reliably capture a deviation of the simplified estimation from the more complex estimation or the true value, an estimation of the performance metric with an accuracy at least comparable to the performance reference can be obtained close to an execution timeframe of the baseline model for components in an optical transport network. In other words, the machine learning model is trained to capture the behavior of the performance reference, allowing storing the behavior in the machine learning model as a computationally light application, such as an Artificial Neural Network.

In preferred embodiments, the performance reference comprises a monitored performance metric obtained from a monitoring system of a corresponding physical connection in a monitored network and/or a high precision performance metric obtained from a high precision performance estimation based on the connection parameters.

In principle, a monitored performance metric from a monitoring system of a corresponding physical connection could be considered as a reliability standard for the performance metric. However, the amount of available data from such a monitoring system is usually limited by the requirement to provide a physical implementation of the monitored system and further by the requirement to perform an assessment of performance metric in a comparatively large parameter space. Further, the monitored performance metric may be subject to measurement errors or systematic errors.

Thus, preferably said monitored performance metric is combined or replaced with a high precision performance metric obtained from high precision performance estimation. In the case of an optical network, such high precision performance estimation may correspond to a numerical simulation of the physical system underlying the connection, for example numerical Schrödinger equation simulation (e.g. split-step-Fourier), or may correspond to a computational intensive analytical model, such as the Enhanced Gaussian Noise (EGN) model.

In preferred embodiments, the high precision performance estimation has a higher computational complexity than the baseline model, and in particular has an execution time for a set of connection parameters which is at least an order of magnitude slower than the baseline model for the same set of connection parameters.

While computationally expensive as compared to the baseline model, a representative set of connection parameters may be calculated in advance for training purposes of the machine learning model, and the machine learning model may then capture, during the training with the connection parameters, the expected deviation between the baseline model and the high precision performance estimation to improve the estimation of the baseline model during the method according to the first aspect and its embodiments. Thus, online service provisioning and/or optical path restoration may be provided in a sufficiently short timeframe despite an execution time of the high precision estimation being at least an order of magnitude slower.

In preferred embodiments, the method further comprises training the machine learning model. The method then comprises obtaining a performance reference of a training connection, the training connection being described by training connection parameters, and estimating a baseline performance metric of the training connection with a baseline model based on the training connection parameters. Further, the method comprises determining a deviation between the baseline performance metric and the performance reference for the training connection parameters, and training the machine learning model with the training connection parameters as an input of the machine learning model and the deviation as an output of the machine learning model.

Said training connection may be described by the same parameters as the connection of the network and may provide a representative or example of a connection of the physical network for the purposes of training. Following the training of the machine learning model with a sufficiently large set of training connections, the machine learning model may be applied to connections not part of the set of training connections to improve an estimation of the baseline model for connection parameters for which no performance reference is available.

In some embodiments, obtaining the performance reference comprises retrieving a set of monitored performance metrics for the training connection parameters.

In some embodiments, obtaining the performance reference comprises calculating the performance reference with a high precision performance estimation based on the training connection parameters, the high precision performance estimation having a higher computational complexity than the baseline model.

In preferred embodiments, training the machine learning model comprises calibrating the deviation prior to the training with a confidence based shaping function, such as to reduce an impact of low-confidence training connection parameters on the output of the machine learning model after the completion of training.

One of the advantages of the method according to the first aspect and its embodiments is that the deviation between the baseline performance metric of the baseline model and performance reference is available during the training of the machine learning model and therefore prior to the operation of the machine learning model. Hence, a bias may be imprinted onto the deviation from the baseline model based on a confidence with respect to the performance reference, such that said bias will be reproduced by the machine learning model during operation without expending additional processing resources. Hence, calibrating the deviation prior to the training with said confidence based shaping function may reduce the computational footprint of a calibration of the output of the machine learning model e.g. in a routing engine.

Such a bias may be advantageously applied for training connection parameter associated with a comparatively low number of samples with similar operating conditions in the training set, or in cases of an estimated or a predefined reduced confidence with respect to the accuracy of the performance reference determined at the training stage, e.g. in the case of large deviations between monitored performance metrics or reduced confidence in the accuracy of a model used to calculate a performance reference.

Further, based on the availability of both the baseline performance metric and the performance reference at the training stage, a set of applicable connection parameters for applying a performance metric correction based on the output of the machine learning model may be preconfigured to be dynamically used during the method according to the first aspect. In this way, the performance metric correction may be dynamically bounded or even switched off based on the connection parameters during the method according to the first aspect, such as during an execution of a routing engine.

Hence, in preferred embodiments, the method further comprises a step of checking whether said connection parameters meet a validity criterion indicating whether said connection parameters lie within a range and/or selection of connection parameters for which said machine learning model has been sufficiently trained. For example, if a number of samples in a training data set with a certain characteristic (e.g. a fiber or amplifier type, a power level, a frequency range, or the like) is below a certain threshold, connection parameters with said characteristic may not meet the validity criterion.

In preferred embodiments, combining the baseline performance metric and the performance metric correction based on the calibration function comprises a step of comparing the connection parameters to a range and/or selection of bounded connection parameters, and reducing a contribution of the performance metric correction based on the step of comparing.

For example, if a number of samples in a parameter region of a training data set of the machine learning model associated with the connection parameters is below a certain threshold, the performance metric correction may be bounded according to a pre-configured function or based on the number of sample in said parameter region. In some embodiments, said bounded connection parameters may be selected by a user of a routing engine.

A second aspect of the invention relates to a computer-implemented machine learning model for a performance metric evaluation system for a connection or a part of a connection between nodes in a network. The machine learning model comprises a number of inputs corresponding to connection parameters describing the connection or the part of the connection. The machine learning model is obtained by a training sequence. Said training sequence comprises obtaining a performance reference of a training connection, the training connection being characterized by training connection parameters, and estimating a baseline performance metric of the training connection with a baseline model based on the training connection parameters. The training sequence further comprises determining a deviation between the baseline performance metric and the performance reference for the training connection parameters, and training the machine learning model with the training connection parameters as an input of the machine learning model and the deviation as an output of the machine learning model.

Said machine learning model according to the second aspect may be advantageously used in the method according to the first aspect and may further comprise or implement modifications related to the training or operation of the machine learning models discussed in conjunction with the method according to the embodiments of the first aspect. For example, a binary storage or an ASIC/FPGA configuration may store a machine learning model based algorithm as a result of the training sequence, which algorithm can be used in the planning and/or management of the network.

In preferred embodiments, obtaining the performance reference comprises retrieving a set of monitored performance metrics for the training connection parameters, and/or calculating the performance reference with a high precision performance estimation based on the training connection parameters, the high precision performance estimation having a higher computational complexity than the baseline model.

A third aspect of the invention relates to a performance metric evaluation system for a connection or a part of a connection between nodes in a network, the connection being described by a set of connection parameters. The system comprises a baseline performance metric processing unit and a machine learning module. The baseline performance metric processing unit is configured to estimate a baseline performance metric of the connection with a baseline model based on the connection parameters. The machine learning module is configured to implement a machine learning model, such as the machine learning model according to the second aspect of the invention, wherein the machine learning model is trained for evaluating a deviation between the output of the baseline model and a performance reference for the same set of training connection parameters. The system is then configured to combine the baseline performance metric and the performance metric correction based on a calibration function to obtain the performance metric.

The system according to the third aspect may further be configured to implement any embodiment of the method according to the first aspect.

In preferred embodiments, the network is an optical transport network, in particular a DWDM network, and the connection is a lightpath connecting nodes of the optical transport network or a portion of the lightpath traversed by an optical beam.

In preferred embodiments, the connection parameters comprise one or more of a channel frequency, an optical power, a type of a network element in the connection, a modulation format, a bit rate, and/or a channel shape.

In preferred embodiments, the performance metric assesses an impact of a nonlinear contribution of the connection on a signal quality in the network, in particular an optical power dependent modification of a signal traversing an element of the network, preferably an optical power dependent modification of the optical properties of an optical fiber.

In preferred embodiments, the performance metric includes one or more of an optical signal to noise ratio, a power level, a bit error rate, a Q factor, and/or a noise figure.

In preferred embodiments, the baseline model has an execution time compatible with online service provisioning and/or optical path restoration in an optical transport network, in particular an execution time of less than 50 ms and preferably less than 20 ms.

In preferred embodiments, the performance reference comprises a monitored performance metric obtained from a monitoring system of a corresponding physical connection in a monitored network and/or a high precision performance metric obtained from a high precision performance estimation based on the connection parameters.

In preferred embodiments, the high precision performance estimation has a higher computational complexity than the baseline model, and in particular has an execution time for a set of connection parameters which is at least an order of magnitude slower than the baseline model for the same set of connection parameters.

In preferred embodiments, the machine learning model is obtained by a training process comprising calibrating the deviation prior to the training with a confidence based shaping function, such as to reduce an impact of low-confidence training connection parameters on the output of the machine learning model after the completion of training.

In preferred embodiments, the system is configured to check whether said connection parameters meet a validity criterion indicating whether said connection parameters lie within a range and/or selection of connection parameters for which said machine learning model has been sufficiently trained..

In preferred embodiments, the system is configured to compare the connection parameters to a range and/or selection of bounded connection parameters, and reduce a contribution of the performance metric correction based on the comparison.

A fourth aspect of the invention relates to a computer program comprising machine readable instructions, in particular a routing engine for validating lightpaths of an optical transport network, which when the computer program is executed by a processing unit cause the processing unit to implement a method according to any one of the embodiments of the first aspect and/or to train and/or implement a machine learning model according to any of the embodiments of the second aspect and/or to implement and/or to control a system according to any one of the embodiments of the third aspect.

### DETAILED DESCRIPTION OF EMBODIMENTS

The features and numerous advantages of the method and machine learning model and the corresponding systems according to the present invention will best be understood from a detailed description of preferred embodiments with reference to the accompanying drawings, in which:
- Fig. 1: shows a schematic optical transport system according to an example;
- Fig. 2: illustrates a schematic diagram of a routing engine according to an example;
- Fig. 3: shows an example of a method of evaluating a performance metric of a connection or a part of a connection between nodes in a network;
- Fig. 4: shows a schematic representation of a validation engine for estimating a performance metric according to an example;
- Fig. 5: shows a schematic representation of a training process of a machine learning model according to an example; and
- Fig. 6A, 6B: show comparative results of the nonlinear optical signal to noise ratio in an optical fiber link as a function of frequency obtained with iGN, EGN and an embodiment of the invention according to an example.

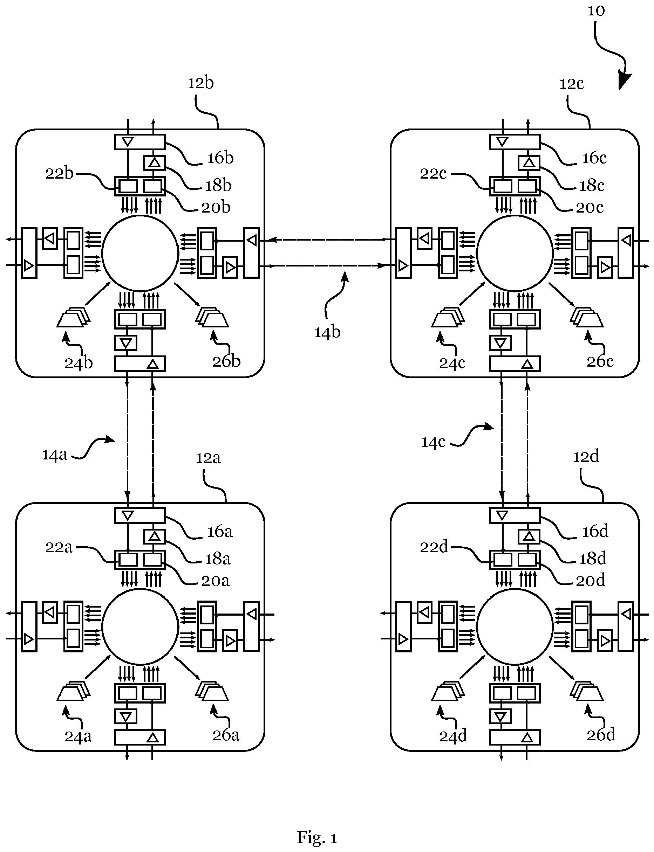

Fig. 1 shows a schematic example of a portion of an optical transport network 10 comprising a plurality of nodes 12a-12d providing an exemplary lightpath between a first node 12a and a fourth node 12d past the intermediary second and third nodes 12b, 12c via the active optical fiber links 14a-14c. Each node 12a-12d comprises preamplifiers 16a-16d for amplifying an incoming optical signal and boosters 18a-18d for amplifying an outgoing optical signal. Wavelength selective switches (WSS) 20a-20d can be used to linearly select and combine wavelength slots constituting the outgoing signal. Similarly, a splitter 22a-22d can be used to decompose the wavelengths of an incoming signal into separate signals. Each node 12a-12d may then use arrayed wavelength gratings 24a-24d and 26a-26d to add and drop signals to/from the decomposed wavelength slots, respectively.

Generally, an optical transport network 10 may comprise a large plurality of nodes 12a-12d and a routing engine (not shown) may be used to find an optimal path for a signal inserted (added) in a first node 12a and designated for (dropped at) a fourth node 12d, selecting an appropriate wavelength slot, and a series of intermediary nodes 12b, 12c for building a lightpath.

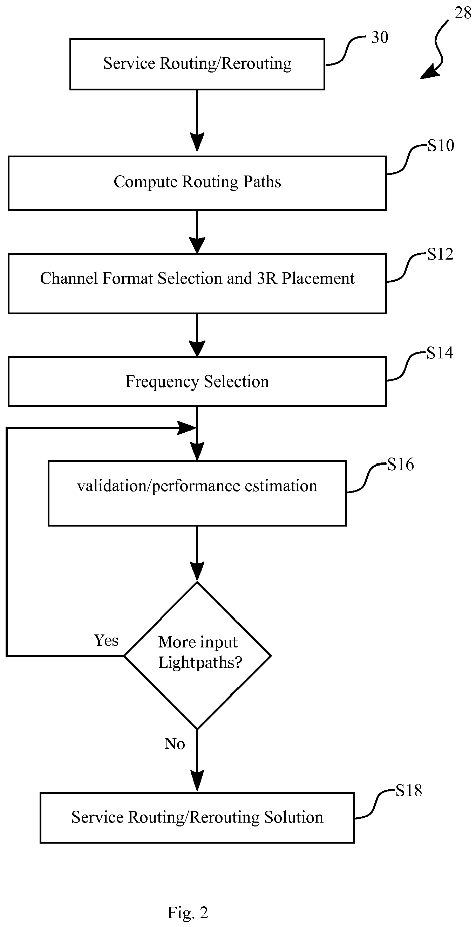

A schematic diagram of a routing engine 28 according to an example is illustrated in Fig. 2. The routing engine 28 receives a request 30 for a service routing and computes a plurality of potential routing paths in a first step S10, wherein the potential routing paths comprise a series of traversed intermediary nodes 12b, 12c based on the network topology and its current state (e.g. resources available). In a second step S12, the routing engine 28 can select a channel format, such as a modulation format symbol rate, FEC mode, or the like, and may place 3R (Reamplification, Reshaping, and Retiming) devices along the potential routing path. In a third step S14, the routing engine 28 may select a frequency, e.g. a frequency slot in the available frequency spectrum, to define a potential lightpath connecting and nodes 12a, 12d associated with the service request 30.

For each of the generated lightpaths, the routing engine 28 may then perform a validation/performance estimation in a fourth step S16 to estimate a signal quality associated with said potential lightpath. A lightpath may be considered to be feasible if one or several optical performance metrics (e.g., Optical Signal to Noise Ratio, OSNR) is maintained within a given threshold (e.g., OSNR larger or equal to zero), allowing the correct detection (that is, below a pre-defined Bit Error Rate, BER) of the optical signal at the receiver end.

Accordingly, in a fifth step S18, the routing engine 28 may then select a routing solution based on the performance and resource usage of the potential lightpaths generated in steps S10-S14 and validated in step S16 to obtain an optimal routing solution.

The routing engine 28 may be used to initially establish a service between nodes, but may also be used to provide an alternative service in case of failure of an existing routing solution (restoration). In both cases, a fast (re-)establishment of the service may depend severely on the computational costs associated with the validation/performance estimation performed in step S16.

Said validation/performance estimation comprises an estimation of the impairments affecting the signal traversing a plurality of components included in the nodes 12a-12d and the optical fiber links 14-14C in between, which in the case of optical transport networks 10 include nonlinear impairments depending on the optical power at each component 12a-22d. For example, said impairments may comprise of Kerr effects (Raman Amplification, Stimulated Raman Scattering, nonlinear effects), amplifier response, coherent and incoherent crosstalk, among others.

In principle, all dielectric materials respond nonlinearly to strong enough electromagnetic fields. In optical fibers this occurs mostly from nonlinear refraction, i.e., field-intensity dependence of the refractive index of the material, which referred to as the "Kerr effect". The Kerr effect is one of the most important sources of performance degradation in optical fiber communication systems, and it is the cause for the nonlinear phenomena known as Self-Phase Modulation (SPM), Cross-Phase Modulation (XPM) and Four-Wave Mixing (FWM).

However, these nonlinear impairments can only be accurately computed with a significant computational effort including complex numerical simulations or computationally expensive model calculations. Taking as an example nonlinear propagation effects, the accurate simulation requires generally high order computation times, numerical Schrödinger equation simulation (e.g. split-step-Fourier), while heuristic methodologies (e.g. Gaussian Noise model, GN) allow a worst case estimation in very constrained conditions (e.g. with respect to channel bandwidth, spectral shape and spacing). For each node and link traversed by the lightpath the inaccuracies will accumulate, which typically translates into imposing large performance margins. On the other hand, numerical models allow the full characterization of each component providing more realistic performance calculations at the expense of very high computation effort.

The present invention aims at overcoming these shortcomings of the validation in prior art approaches by providing an improved evaluation of a performance metric of a connection or a part thereof to allow a routing engine, such as the one shown in the example of Fig. 2, to calculate alternative lightpaths in a short timeframe to become compatible with optical path restoration in the optical transport network 10.

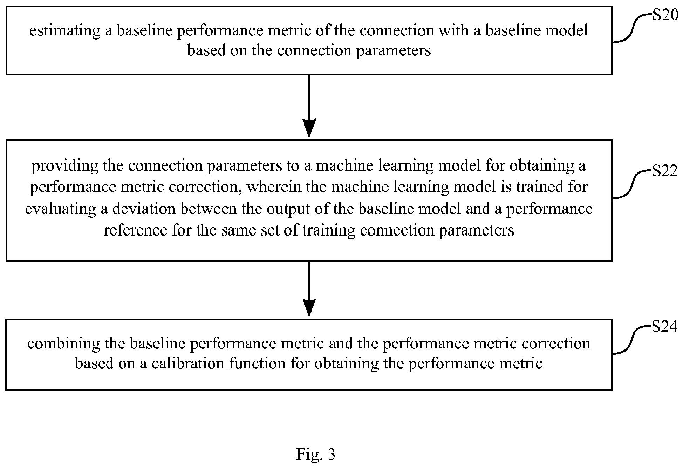

Fig. 3 illustrates an example of a method of evaluating a performance metric of a connection or a part of a connection between nodes in a network, wherein the connection is described by a set of connection parameters. The method comprises estimating a baseline performance metric of the connection with a baseline model based on the connection parameters (step S20), and providing the connection parameters to a machine learning model for obtaining a performance metric correction, wherein the machine learning model is trained for evaluating a deviation between the output of the baseline model and a performance reference for the same set of training connection parameters (step S22). The method then comprises combining the baseline performance metric and the performance metric correction based on a calibration function for obtaining the performance metric (step S24).

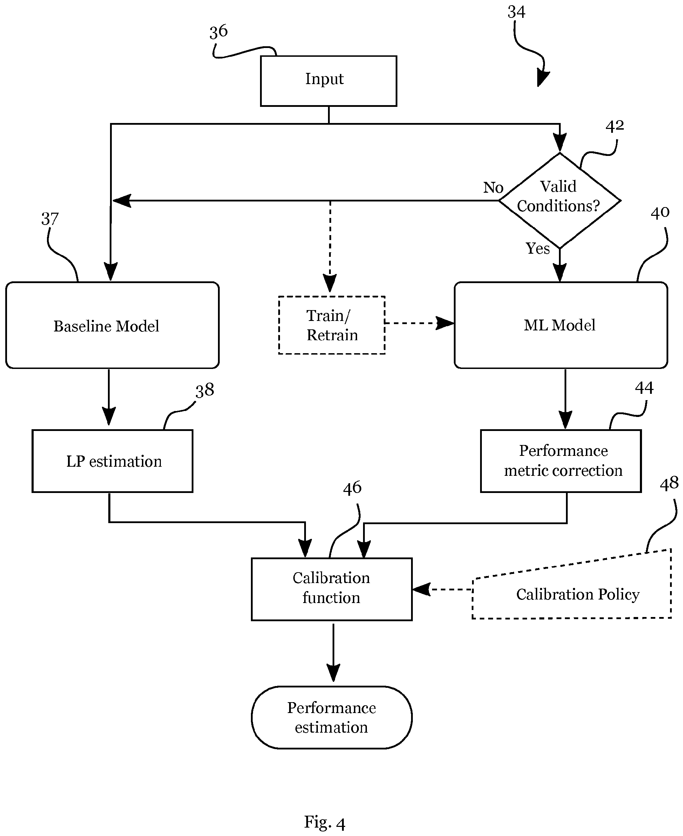

Fig. 4 illustrates a schematic representation of an example of a validation engine 34 implementing an embodiment of the method according to Fig. 3. A potential lightpath determined by the routing engine 28 may be provided as a connection 36 described by connection parameters to the validation engine 34. A baseline model 37 then provides a low precision estimation 38 of the estimated performance metric for the connection 36 based on the connection parameters, which may be selected based on an execution time threshold, such as to provide a rough but reliable estimate of the performance metric for the connection parameters.

Concurrently, a performance metric correction 44 of the baseline performance metric may be determined by a machine learning model 40 trained for evaluating a deviation between the output of the baseline model 37 and a performance reference for the same set of training connection parameters. Initially, the connection parameters may be examined as regards to their validity as inputs to the machine learning model 40 in a validation stage 42. Said examination of the connection parameters may implement boundary conditions for which a suitably large set of training connections has been provided to the machine learning model 40 to assess whether the baseline model-based performance metric (i.e. low precision estimate) for the connection parameters is likely to be accurately improved by the machine learning model 40.

In case the connection parameters are deemed applicable by the validation stage 42, the machine learning model 40 may provide an output based on the connection parameters to be used as a performance calibration/correction 44 for the low precision estimation 38 of the baseline model 37. A calibration function 46 then combines the low precision estimation 38 and the performance metric correction 44 to obtain the performance metric for the input connection 36.

Furthermore, and as shown in Fig. 4, the validation engine 34 may comprise a calibration policy module 48, such as for applying a confidence based shaping function, as part of the calibration function 46 which may bound the impact of the performance metric correction 44 on the determined performance metric for the lightpath according to, for example, externally defined conditions in order to provide external calibration controls for application-based tunability.

For example, the calibration policy module 48 can be used to shape the performance estimation by taking into account current network and traffic state and/or to enforce operator/user policies. The input of the calibration policy module 48 can be based on real-time information and, as a result, the calibration policy module 48 enables to influence the estimation immediately (i.e. without waiting for a new opportunity to retrain the ML model 40). Moreover, the operator/user may enforce different policies according to, for example, traffic priority on a per demand/lightpath basis, e.g. by controlling a contribution of the performance metric correction 44 to the performance metric based on the traffic priority. In some embodiments, the calibration policy module 48 includes a plurality of policies in order to depreciate the performance metric correction 44 based on the connection parameters, operator defined settings, a traffic priority, and/or dynamic system properties.

In case the network management system/SDN controller has access to monitoring information about the performance of established lightpaths, this information can be compared to the estimation done beforehand. In case there are differences considered to be significant, e.g. above a pre-defined threshold, it can use this information to perform short-term corrections in the estimation (via the calibration policy module 48) before embedding this information in the next opportunity to retrain the ML model 40.

The result of the calibration function 46 is an estimation of the performance of the input lightpath, which can have an accuracy close to that of a high precision estimation utilized at the stage of generating the machine learning model. Therefore, the routing engine can seamlessly combine high accuracy with fast computation times, making it well-suited to demanding online service provisioning applications such as optical restoration.

In case the connection parameters are deemed not applicable by the validation stage 42, the validation engine 34 may proceed without a correction of the baseline model 37 and the performance metric may correspond to the low precision estimation 38 of the baseline model 37. Note that, whenever the input conditions deviate substantially from the ones with which the machine learning model 40 was trained, the routing engine 28 not only can discard the performance metric correction 44 from the machine learning model 40 for that specific routing event but it can also trigger the training/retraining of the machine learning model 40.

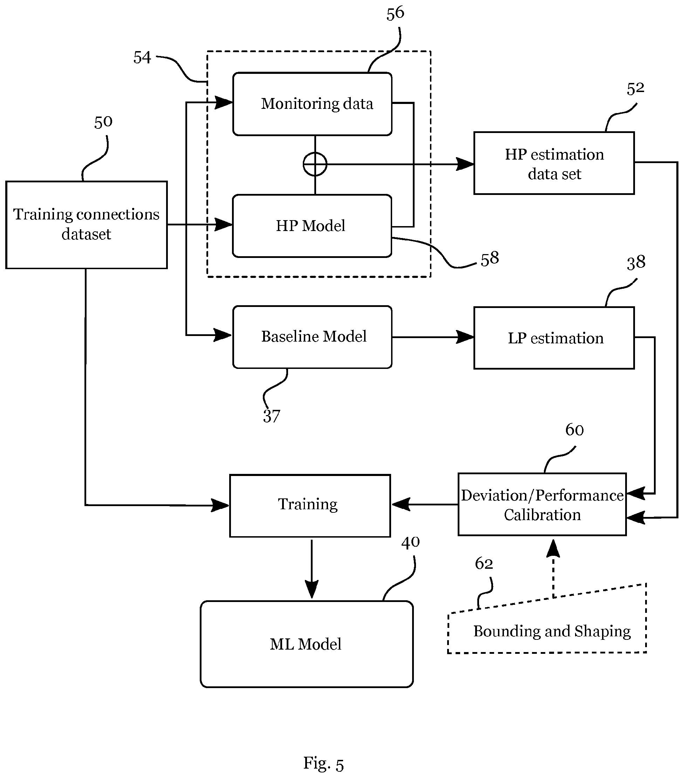

Fig. 5 illustrates an example of a training process of the machine learning model 40 to be used during the generation and/or retraining of the machine learning model 40. The machine learning model 40 is generated for a set of training connections described by training connection parameters 50 representing a cross-section or common parameters for the respective connection which the performance metric is generated for.

For each training connection, the baseline model 37 generates a low precision estimation 38. Further, for the same training connection, a high precision (HP) estimation data set 52 is obtained from a high precision performance metric generation unit 54. Note that the "HP estimation data set" is an example of the aforementioned performance reference. Said HP estimation data set 52 may be based on monitored data 56 corresponding to the training connection parameters 50 of the training connection, a high precision estimation 52 of a high precision (HP) model 58 based on a computationally expensive estimation method as compared to the baseline model 37, or a function or combination thereof. A deviation calibration function 60 may then receive both the low precision estimation 38 and the high precision estimation to generate a deviation of the high precision estimation from the low precision estimation 38, such as a difference or a ratio of the estimations 38, 52.

Said deviation may then be used as a target output value for the training connection parameters 50 for training the machine learning model 40. In other words, the machine learning model 40 is trained to predict a deviation of the high precision estimation 52 from the baseline low precision estimation 38 in order to reduce the impact of the simplifying assumptions used to reduce the computational effort of the baseline model 37. The machine learning model 40 may then effectively abstract the complexity of a more accurate HP model 58 (e.g. to characterize in more detail physical impairments) and/or may abstract the performance data from measurements 56 obtained via a monitoring system running on a specific network.

As a result the contribution of the machine learning model 40 to the performance estimation is recovered as a performance metric correction 44 with respect to the baseline estimation 38 and can be bounded to depend on the confidence level of the input conditions 50. For example, as conditions deviate more from the ones in the input training dataset, the contribution of the machine learning model 40 to the estimation can be further mitigated.

The training of the machine learning model 40 can thus embed a constraint with respect to a limited number of high precision estimates such that its contribution to the final estimation can be larger/smaller according to how similar/different are the input conditions during a routing event. This is possible since both the baseline model 37 and the accurate model/monitored data 56, 58 are used to train the machine learning model 40. Moreover, by having prior knowledge of the expected accuracy of the baseline model 37, this information can be used at the training stage of the machine learning model 40, which relies on a single and common input training dataset, to discard or mitigate the impact of data from a monitoring system which, by comparison with the baseline model 37, can be rated as less reliable. Therefore, the baseline model 37 is effectively utilized to, for example, detect/mitigate the impact of monitoring errors.

In order to bound the performance metric correction 44, prior to the training and as part of the deviation calibration function 60, the deviation may be adjusted with a bounding and shaping module 62 to bias the behavior of the machine learning model 40 based on a confidence with respect to the high precision estimation 52. As an illustrative example, a high precision estimation 52 based on monitored data 56 may only be available for isolated training connection parameters 50 and may further be associated with measurement errors during the gathering of the monitored data 56, such as a variance of the values obtained by the monitoring system. In such cases, the deviation of the estimates 38, 52 may be bounded based on a confidence level attributed with the high precision estimation 52, biasing the machine learning model 40 to place higher emphasis on the estimations of the baseline model 37 for similar connection parameters. In this way, during the operation of a routing engine, such as the routing engine of Fig. 2, a reduced additional computational effort may be required to filter and/or calibrate a performance metric correction 44 determined by the machine learning model 40.

The bounding and shaping module 62 can be used to evaluate the significance of the examples used to train the machine learning model 40 (e.g. monitored data 56 or high precision estimations). For example, based on meeting a threshold of a number of similar examples, a threshold of a deviation from an average of said similar examples and/or a predefined deviation threshold, the significance of a given example can be emphasized, used as it is, depreciated or even discarded in training. Examples with high significance are emphasized in training with an extra weight (i.e. more significance is given to that example in training, based on the assumption that the corresponding estimations or measured data are more accurate). In contrast, examples with low significance, are depreciated or even discarded (i.e. they are not used for training to not bias the predictions). Examples with medium significance may be used unchanged. The bounding and shaping process can be evaluated by deterministic actions (e.g. based on baseline model accuracy boundaries and/or dynamic range) or by means of statistical tools (e.g. tools to identify outliers in a dataset). In this way, the bounding and shaping module 62 can shape the predictions in order to be more accurate in the desired range of operation. In the context of using monitored data 56 as the high precision input 52, the bounding and shaping module 62 can also be utilized to identify monitored data 56 that is not reliable (e.g. due to errors in the measurement devices). For instance, it can be inferred based on the baseline model estimation 38 that a given monitored value is clearly outside a pre-defined range of likely values, signaling that it might not be a reliable measurement and, hence, should be ignored when training the model 40.

In some embodiments, a factor representing the applicability of the performance metric correction determined by the machine learning model is a trained output of the machine learning model in addition to the deviation and said factor may be used to bound the performance metric correction in a routing engine.

The skilled person will appreciate that in case connection parameters are rejected at the validation stage 42 described in conjunction with the validation engine illustrated in Fig. 4, the connection parameters may be provided as training connection parameters 50 in order to retrain the machine learning model 40 with the additional training connection parameters 50 if a high precision performance reference 52 can be provided for them, e.g. by providing monitoring data 56 for a physical implementation of the connection parameters or by calculating a high precision estimate 52 with an HP model 58 for the connection parameters. The new machine learning model 40 may then replace the previous one in the validation engine 34 (see Figure 4) at a given point in time beyond which this is the model 40 used to calibrate the performance metric correction 44.

As an exemplary embodiment, the performance metric can be selected as a nonlinear optical signal to noise ratio of an optical fiber. Said nonlinear optical signal to noise ratio may be assessed with a simplified solution of the Manakov equation, such as a simplified Gaussian noise (GN) model, which already provides asymptotic heuristic equations. Said model 37 may comprise one or more simplifying approximations selected from coherent noise accumulation or an incoherent, closed form approximation thereof, i.e. expressed by an analytical equation, an assumption of Nyquist channels, i.e. having a roll-off of zero, with power diversity, an assumption of a Gaussian mode distribution, an assumption of Gaussian channel spectral distribution, and/or limitations on the applicable scenarios, such as limited values of bandwidth, limited values of accumulated dispersion, limited values of channel spacing, or the like.

A successful variant of the GN model for lightpath validation is the so-called incoherent GN (iGN) model, including an approximation of linear noise accumulation. Due to its simplicity, making it compliant with computation time requirements of online service provisioning applications, this approach is being followed by industry consortiums promoting open and disaggregated network deployments, such as the Telecommunications Infrastructure Project (TIP) created by Facebook, namely under the Physical Simulation Environment (PSE) stream. To account for a comparatively low accuracy of the iGN for estimating nonlinear impairments, margins are added to account for inaccuracies, which can lead to conservative estimations, which may increase CAPEX by not exploiting the full potential of line interfaces or by deploying additional 3R regenerators, but may at the same time provide a sufficiently reliable baseline performance metric.

At the same time, a performance reference may be determined based on more accurate variants of the GN model, such as the mentioned EGN. As described above, the computation effort required by EGN is currently not compatible with online service provisioning applications. As a result, EGN is usually limited to offline applications such as network planning where more time might be available. However, the EGN model can be used as an HP model 58 to provide a high precision estimation of the performance metric of a given connection 36 and may thus provide a high precision estimation 52 for a set of training connection parameters 50. Said HP model 58 may include algorithms to numerically simulate a propagation of the signal, such as calculations for coherent noise accumulation, may include a greater amount of spectral dependency pertaining to frequency, channel shape and spacing, power, or the like with respect to the properties of the lightpath, and may include one or more correction of Gaussian assumption terms, e.g. pertaining to self-channel interference (SCI), cross-channel interference (XCI) and/or multiple-channel interference (MCI), and may be characterized by including calculations of several triple integrals with a numerical solver.

After training the machine learning model 40 with the training connection parameters 50 and the deviation between the high precision estimation 52 and the low precision estimation 38, the machine learning model 40 was found to accurately provide a performance metric correction 44 for signal propagation in an optical fiber 14a-14c.

The invention was implemented to model the contribution to optical signal to noise ratio (OSNR) from nonlinear (NL) impairments. An extensive set of configurations using Standard Single Mode Fiber (SSMF) was generated combining 45 different fiber lengths (10 to 120 km with 2.5 km increments) with 17 different launch powers (-3 to +5 dBm with 0.5 dB increments), considering all 96 frequencies of the fixed 50 GHz grid and assuming 34 Gbaud Quadrature Phase Shift Keying (QPSK) channels. The resulting input training dataset 50 can be used by the iGN as an exemplary baseline model 37 of the invention and by the EGN model as an HP model 58 and the outcome of both models is compared to create the performance metric correction 44 from the difference of both low precision and high precision estimations 38, 52. The performance metric correction 44 values along with the input training connection parameters 50 can then be then used to create the machine learning model 40 as illustrated in Fig. 5. Afterwards, the accuracy of the NL OSNR estimation obtained by using the validation engine 34 as given in the workflow depicted in Fig. 4 was compared with that of using instead the baseline model (iGN) or the detailed high precision performance metric estimation (EGN).

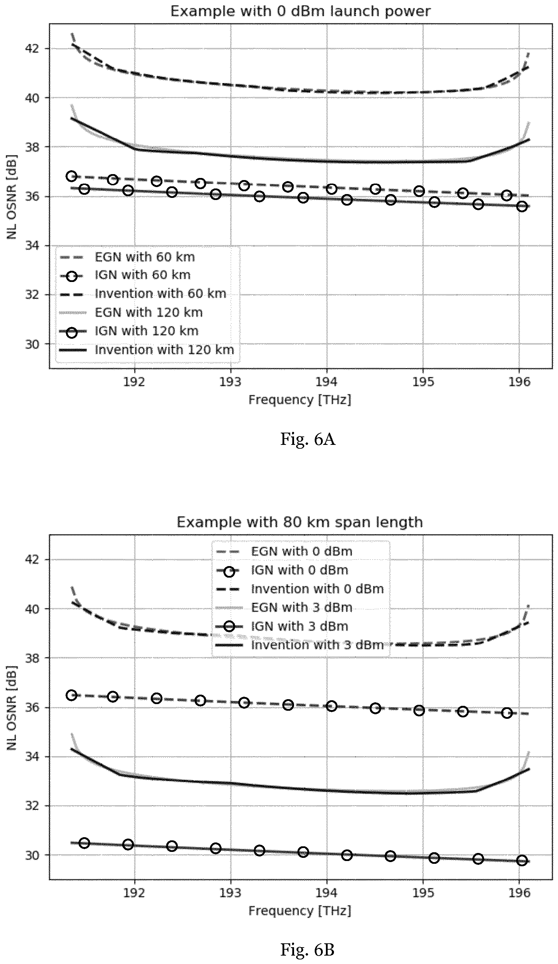

For a sub-set of configurations, Figures 6A and 6B show comparative results of the NL OSNR in an optical fiber link 14a-14c as a function of frequency obtained with iGN as the baseline model (highlighted with black circles), EGN as the basis of the performance reference and the implemented embodiment of the invention. Simulations pertaining to different conditions are represented by dashed and solid lines, respectively. Fig. 6A shows comparative simulations with a constant launch power of o dBm for span lengths of 60 km (dashed lines) and 120 km (solid lines). Fig. 6B shows comparative simulations for a constant span length of 80 km, wherein the dashed and solid curves pertain to different launch powers of o dBm and 3 dBm, respectively. The other input parameters are fixed.

Clearly, iGN is conservative in these scenarios (always lower NL OSNR) and cannot fully capture the dependencies related to frequency and neighbor channels (i.e. see curved shaped of EGN curves vs. straight lines of iGN). On the other hand, the implementation of the method according to Fig. 3 is able to almost perfectly match EGN, showing high accuracy and ability to capture the stated dependencies. Overall, for the entire set of results the average difference between the EGN estimation and the invention estimation is -0.0001 dB with a standard deviation of 0.1421 dB, providing clear evidence of the invention's accuracy. Importantly, this is attained at the expense of a much faster routing engine 28. The inventors found that a reduction of 97.3% on the computation time is achieved by using the above-described implementation of the method according to the invention. The figure also shows that the computation times of the invention are in the order of a few milliseconds and, thus, much lower than the 50 ms usually set as the maximum time acceptable to recover from failures via optical protection mechanisms.

It is noted that the above-described nonlinear impairment in an optical fiber should be construed as a nonlimiting example of a performance metric of a connection for the invention. Similar heuristic models with simplifying assumptions for estimating an impact of impairments in other components of a lightpath in a timeframe compatible with optical path restoration can be used as baseline models in conjunction with the method illustrated in Fig. 3 to contribute to a more accurate estimate of an overall performance metric for a lightpath in optical transport networks. Furthermore, the concepts disclosed herein can be extended to other connections in related networks benefiting from accurate estimations of a performance metric associated with a connection candidate.

The description of the preferred embodiments and the figures merely serve to illustrate the invention and the beneficial effects associated therewith, but should not be understood to imply any limitation. The scope of the invention is to be determined solely by the appended claims.

### LIST OF REFERENCE SIGNS

- 10: optical transport network
- 12a-12d: nodes
- 14a-14d: optical fiber connection
- 16a-16d: preamplifier
- 18a-18d: booster
- 20a-20d: wavelength selective switch
- 22a-22d: splitter
- 24a-24d: arrayed wavelength grating
- 26a-26d: arrayed wavelength grating
- 28: routing engine
- 30: service request
- 34: validation engine
- 36: connection
- 37: baseline model
- 38: baseline performance estimation
- 40: machine learning model
- 42: validation stage
- 44: performance metric correction
- 46: calibration function
- 48: calibration policy module
- 50: training connection parameters
- 52: performance reference/high precision estimation data set
- 54: performance reference generation unit
- 56: monitored data
- 58: high precision model
- 60: deviation calibration function
- 62: bounding and shaping module

## Claims

1. A computer-implemented method of evaluating a performance metric of a connection (36) or a part of a connection (36) between nodes (12a-12d) in a network (10), the connection (36) being described by a set of connection parameters, the method comprising:
- estimating a baseline performance metric (38) of the connection (36) with a baseline model (37) based on the connection parameters;
- providing the connection parameters to a machine learning model (40) for obtaining a performance metric correction (44), wherein the machine learning model (40) is trained for evaluating a deviation between the output of the baseline model (37) and a performance reference (52) for the same set of training connection parameters (50);
- combining the baseline performance metric (38) and the performance metric correction (44) based on a calibration function (46) for obtaining the performance metric.

2. The method of any one of the preceding claims, wherein the network (10) is an optical transport network (10), in particular a DWDM network (10), and the connection (36) is a lightpath connecting nodes (12a-12d) of the optical transport network (10) or a portion of the lightpath traversed by an optical beam; and/or
wherein the connection parameters comprise one or more of a channel frequency, an optical power, a type of a network element (14a-26d) in the connection (36), a modulation format, a bit rate, and/or a channel shape; and/or
wherein the performance metric assesses an impact of a nonlinear contribution of the connection (36) on a signal quality in the network (10), in particular an optical power dependent modification of a signal traversing an element of the network (10), preferably an optical power dependent modification of the optical properties of an optical fiber; and/or
wherein the performance metric includes one or more of an optical signal to noise ratio, a power level, a bit error rate, a Q factor, and/or a noise figure.

3. The method of any one of the preceding claims, wherein the baseline model (37) has an execution time compatible with online service provisioning and/or optical path restoration in an optical transport network (10), in particular an execution time of less than 50 ms and preferably less than 20 ms.

4. The method of any one of the preceding claims, wherein the performance reference (52) comprises a monitored performance metric (56) obtained from a monitoring system of a corresponding physical connection in a monitored network (10) and/or a high precision performance metric obtained from a high precision performance estimation (58) based on the connection parameters, wherein the high precision performance estimation (58) in particular has a higher computational complexity than the baseline model (37), and preferably has an execution time for a set of connection parameters which is at least an order of magnitude slower than the baseline model (37) for the same set of connection parameters.

5. The method of any one of the preceding claims, further comprising training the machine learning model (40), the method comprising:
- obtaining a performance reference (52) of a training connection, the training connection being described by training connection parameters (50);
- estimating a baseline performance metric (38) of the training connection with a baseline model (37) based on the training connection parameters (50);
- determining a deviation between the baseline performance metric (38) and the performance reference (52) for the training connection parameters (50);
- training the machine learning model (40) with the training connection parameters (50) as an input of the machine learning model (40) and the deviation as an output of the machine learning model (40).

6. The method of claim 5, wherein obtaining the performance reference (52) comprises:
- retrieving a set of monitored performance metrics (56) for the training connection parameters (50); and/or
- calculating the performance reference (52) with a high precision performance estimation (58) based on the training connection parameters (50), the high precision performance estimation (58) having a higher computational complexity than the baseline model (37); and/or
wherein training the machine learning model (40) comprises calibrating the deviation prior to the training with a confidence based shaping function, such as to reduce an impact of low-confidence training connection parameters (50) on the output of the machine learning model (40) after the completion of training.

7. The method of any one of the preceding claims, wherein the method further comprises a step of checking whether said connection parameters meet a validity criterion indicating whether said connection parameters lie within a range and/or selection of connection parameters for which said machine learning model (40) has been sufficiently trained; and/or
wherein combining the baseline performance metric (38) and the performance metric correction (44) based on the calibration function (46) comprises:
- comparing the connection parameters to a range and/or selection of bounded connection parameters; and
- reducing a contribution of the performance metric correction (44) based on the comparison.

8. A computer-implemented machine learning model (40) for a performance metric evaluation system for a connection (36) or a part of a connection (36) between nodes (12a-12d) in a network (10), the machine learning model (40) comprising a number of inputs corresponding to connection parameters describing the connection (36) or the part of the connection (36), wherein the machine learning model (40) is obtained by a training sequence, said training sequence comprising:
- obtaining a performance reference (52) of a training connection, the training connection being **characterized by** training connection parameters (50);
- estimating a baseline performance metric (38) of the training connection with a baseline model (37) based on the training connection parameters (50); and
- determining a deviation between the baseline performance metric (38) and the performance reference (52) for the training connection parameters (50);
- training the machine learning model (40) with the training connection parameters (50) as an input of the machine learning model (40) and the deviation as an output of the machine learning model (40).

9. The machine learning model (40) of claim 8, wherein obtaining the performance reference (52) comprises:
- retrieving a set of monitored performance metrics (56) for the training connection parameters (50); and/or
- calculating the performance reference (52) with a high precision performance estimation (58) based on the training connection parameters (50), the high precision performance estimation (58) having a higher computational complexity than the baseline model (37).

10. A performance metric evaluation system for a connection (36) or a part of a connection (36) between nodes (12a-12d) in a network (10), the connection being described by a set of connection parameters, the system comprising:
- a baseline performance metric processing unit configured to estimate a baseline performance metric (38) of the connection (36) with a baseline model (37) based on the connection parameters; and
- a machine learning module configured to implement a machine learning model (40), in particular according to claim 8 or 9, trained for evaluating a deviation between the output of the baseline model (37) and a performance reference (52) for the same set of training connection parameters (50);
wherein the system is configured to:
- combine the baseline performance metric (38) and the performance metric correction (44) based on a calibration function (46) to obtain the performance metric.

11. The system of claim 10, wherein the network (10) is an optical transport network (10), in particular a DWDM network (10), and the connection (36) is a lightpath connecting nodes (12a-12d) of the optical transport network (10) or a portion of the lightpath traversed by an optical beam; and/or
wherein the connection parameters comprise one or more of a channel frequency, an optical power, a type of a network element (14a-26d) in the connection (36), a modulation format, a bit rate, and/or a channel shape; and/or
wherein the performance metric assesses an impact of a nonlinear contribution of the connection (36) on a signal quality in the network (10), in particular an optical power dependent modification of a signal traversing an element of the network (10), preferably an optical power dependent modification of the optical properties of an optical fiber; and/or
wherein the performance metric includes one or more of an optical signal to noise ratio, a power level, a bit error rate, a Q factor, and/or a noise figure.

12. The system of claim 10 or 11, wherein the baseline model (37) has an execution time compatible with online service provisioning and/or optical path restoration in an optical transport network (10), in particular an execution time of less than 50 ms and preferably less than 20 ms; and/or
wherein the performance reference (52) comprises a monitored performance metric (56) obtained from a monitoring system of a corresponding physical connection (36) in a monitored network (10) and/or a high precision performance metric obtained from a high precision performance estimation (58) based on the connection parameters;
wherein the high precision performance estimation (58) in particular has a higher computational complexity than the baseline model (37), and preferably has an execution time for a set of connection parameters which is at least an order of magnitude slower than the baseline model (37) for the same set of connection parameters.

13. The system of any one of claims 10 to 12, wherein the machine learning model (40) is obtained by a training process comprising calibrating the deviation prior to the training with a confidence based shaping function, such as to reduce an impact of low-confidence training connection parameters (50) on the output of the machine learning model (40) after the completion of training.

14. The system of any one of claims 10 to 13, wherein the system is configured to:
- check whether said connection parameters meet a validity criterion indicating whether said connection parameters lie within a range and/or selection of connection parameters for which said machine learning model (40); and/or
- compare the connection parameters to a range and/or selection of bounded connection parameters; and
- reduce a contribution of the performance metric correction (44) based on the comparison.

15. A computer program comprising machine readable instructions, in particular a routing engine (28) for validating lightpaths of an optical transport network (10), which when the computer program is executed by a processing unit cause the processing unit to implement a method according to any one of claims 1-7 and/or to train a machine learning model (40) according to claim 8 or 9 and/or to implement and/or to control a system according to any one of claims 10-14.
